**Europäisches Patentamt**

**European Patent Office**

**Office européen des brevets**

(19)

(11) Veröffentlichungsnummer: **0 191 287**
**B1**

(12)

# EUROPÄISCHE PATENTSCHRIFT

(45) Veröffentlichungstag der Patentschrift:
26.07.89

(51) Int. Cl.⁴: **A 01 C 15/00,** A 01 C 17/00,
A 01 C 7/00, A 01 M 7/00

(21) Anmeldenummer: **86100138.6**

(22) Anmeldetag: **08.01.86**

(54) **Elektronisches System für landwirtschaftliche Verteilmaschine.**

(30) Priorität: **12.01.85 DE 3500885**

(43) Veröffentlichungstag der Anmeldung:
**20.08.86 Patentblatt 86/34**

(45) Bekanntmachung des Hinweises auf die Patenterteilung:
**26.07.89 Patentblatt 89/30**

(84) Benannte Vertragsstaaten:
**DE FR GB**

(56) Entgegenhaltungen:
**EP-A- 0 086 061**
**DE-A- 3 043 602**
**DE-A- 3 310 424**
**US-A- 4 015 366**

**Zeitschrift "LB", 31/1984, Seite 1454**

(73) Patentinhaber: **Amazonen-Werke H. Dreyer GmbH & Co.
KG, Am Amazonenwerk 9-13, D-4507 Hasbergen-Gaste
(DE)**

(72) Erfinder: **Oberheide, Friedrich, Kiefernweg 15,
D-4507 Hasbergen (DE)**
Erfinder: **Bresch, Robert, Berliner Ring 26,
D-4550 Bramsche (DE)**
Erfinder: **Müller, Heinrich, Schwarzriethweg 12,
D-4769 Salzkotten (DE)**

(74) Vertreter: **Patentanwälte Grünecker, Kinkeldey,
Stockmair & Partner, Maximilianstrasse 58,
D-8000 München 22 (DE)**

## Beschreibung

Die Erfindung betrifft ein elektronisches Gerät für landwirtschaftliche Verteilmaschinen.

Ein elektronisches Gerät für landwirtschaftliche Verteilmaschinen ist bereits durch den Artikel «Interessantes von der DLG für die Mineraldüngung» in der Zeitschrift «LB» 31/1984, Seite 1454 bekannt. Dieses Gerät steuert ein Dosierelement einer Verteilmaschine und weist einen Eingang für dem Gut- oder Materialausfluss korrelierte Sensorsignale auf. Es ist eine Eingabetastatur vorhanden, an der verschiedene, für die Funktion des Gerätes notwendige Daten eingegeben werden können.

Dieses elektronische Gerät kann auch für Pflanzenschutzspritzen und Sämaschinen verwendet werden. Die Arbeitsweise des Systems erfolgt in der Form, dass die Arbeitsgeschwindigkeit und die Durchlaufmenge je Minute aufgenommen und mit einer Dosierscheibe abgestimmt werden. Ein Rechner speichert die Daten. Die Werte werden auf Start- und Stoppkommandos automatisch kontrolliert und eingestellt. Die Ausbringmenge wird eingehalten, indem ein elektrisch bedienter Spindelmotor die Zulauföffnung zum Pendelrohr reguliert.

Aus der DE-OS 33 104 424 ist ebenfalls ein elektronisches Gerät für Landwirtschaftliche Verteilmaschinen bekannt, das ein Dosierelement der Verteilmaschine steuert, mit einem Eingang für dem Gut- oder Materialfluss korrelierte Sensorsignale und mit einer Eingabetastatur, an der für die Steuerung notwendige Daten eingegeben werden können.

Die beiden im Stand der Technik bekannten, oben angegebenen Geräte machen es erforderlich, dass bei jedem Wechsel der Materialsorte oder der Verteilmaschine eine Eichung des das Dosierelement steuernden elektronischen Geräts stattfinden muss.

Aufgabe der Erfindung ist es, ein derartiges elektronisches Steuergerät für verschiedene Materialsorten und Verteilmaschinen einfacher austauschbar auszugestalten.

Gelöst wird diese Aufgabe mit einem elektronischen Gerät mit den Merkmalen des Anspruchs 1.

Mit dem erfindungsgemässen Gerät ist es möglich, für verschiedene Verteilmaschinen und/oder für verschiedene Gut- und Materialsorten spezifische Eichwerte in einem Mikroprozessor zu speichern, so dass der Mikroprozessor die von den an den Verteilmaschinen angeordneten Aufnahmesensoren gelieferten Impulse richtig verarbeiten bzw. interpretieren kann. Diese spezifischen Eichwerte können je nach dem um welche Verteilmaschine bzw. Aufnahmesensoren es sich handelt, über einen Eichvorgang oder Umrechnungsfaktor ermittelt worden sein oder aber in der Information bestehen, dass jeder Impuls direkt einem ausgebrachten Materialkorn bzw. einer entsprechenden Materialmenge pro Impuls entspricht; d.h. also, in dem Mikroprozessor werden der jeweiligen Verteilmaschine zugeordnete charakteristische Eichwerte gespeichert. Diese Eichwerte werden entweder direkt vom Hersteller in den Mikroprozessor oder von dem Landwirt nach einem Eichvorgang eingegeben und abgespeichert. Diese Eichwerte kann der Landwirt dann jeweils bei Bedarf wieder abrufen. Der grosse Vorteil des Abspeicherns der den verschiedenen Verteilmaschinen zugeordneten spezifischen Eichwerte wird besonders deutlich, wenn man bedenkt, dass der Mikroprozessor für verschiedenartige Verteilmaschinen eingesetzt wird und in unregelmässiger Folge die verschiedenartigen Verteilmaschinen innerhalb kürzerer oder längerer Zeitabschnitte mehrfach eingesetzt werden. Der Landwirt braucht aufgrund der erfindungsgemässen Massnahme dann jeweils bei dem erneutem Einsatz der jeweiligen Verteilmaschine nur den entsprechenden Eichwert aus dem Speicher abzurufen. Hierdurch wird für den Landwirt der Einsatz der Verteilmaschine wesentlich erleichtert. Es soll mit in die Erfindung eingeschlossen sein, dass auch beispielsweise verschiedene Arbeitsbreiten, Teilbreiten, Ausbringmengen etc. in den Mikroprozessor einspeicherbar und abrufbar sind.

Weiterhin sieht die Erfindung vor, dass der Mikroprozessor verschiedene Rechnerprogramme besitzt, die jeweils auf die entsprechenden Besonderheiten der Verteilmaschine abgestimmt sind. Durch diese Massnahme wird in vorteilhafter und für den Benutzer der Verteilmaschine vereinfachender Weise den evtl. Besonderheiten der einzelnen Verteilmaschinen Rechnung getragen. Hierbei ergibt sich noch eine weitere Vereinfachung für den Landwirt dadurch, dass das jeweilige Rechnerprogramm durch die entsprechende Speichertastatur automatisch bei der Eingabe der maschinenspezifischen Eichwerte abrufbar ist.

Um die Berücksichtigung des unterschiedlichen Raddurchmessers der Räder der Schlepper, an denen der jeweilige Sensor zur Erfassung der Fahrgeschwindigkeit bzw. der zurückgelegten Wegstrecke angeordnet ist, einfach zu gestalten, ist erfindungsgemäss vorgesehen, dass weiterhin Speicherplätze für den Raddurchmesser des Rades vorgesehen sind, an dem Sensor zur Ermittlung der Fahrgeschwindigkeit angeordnet sind.

Weitere Einzelheiten und Vorteile der Erfindung sind der Beispielsbeschreibung und den Zeichnungen zu entnehmen. Hierbei zeigen

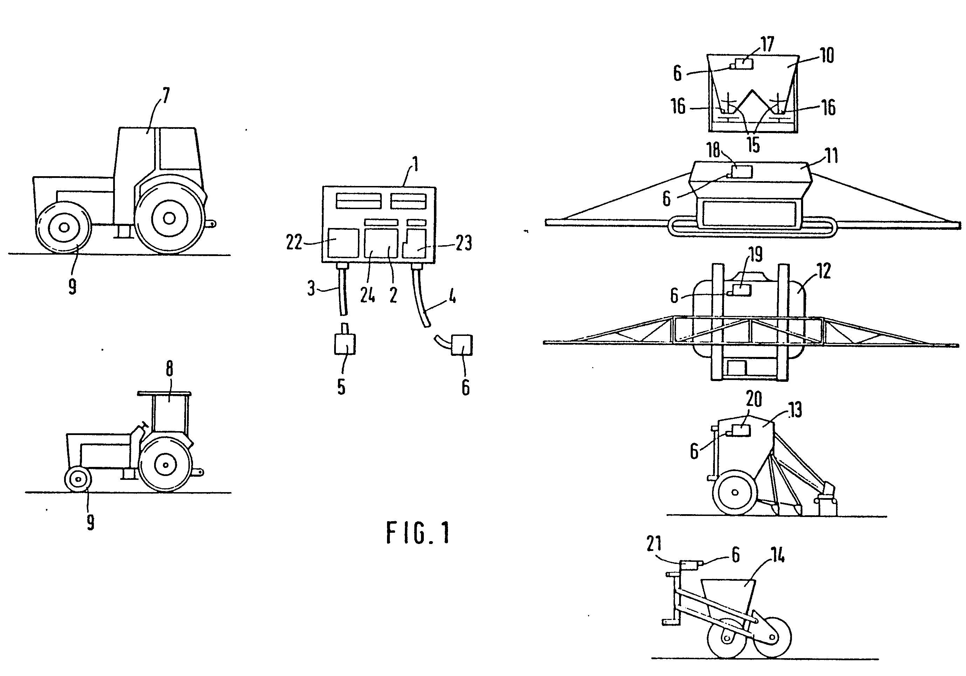

Fig. 1 eine schematische Darstellung der Zuordnung des Gerätes zu verschiedenen Schleppern und Verteilmaschinen und

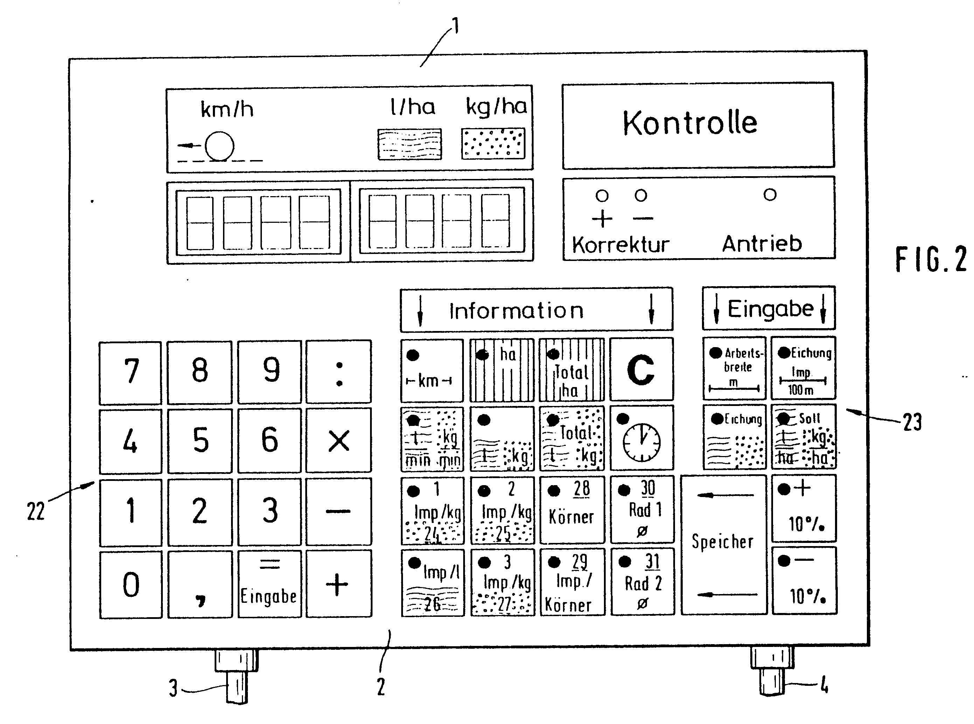

Fig. 2 die Eingabetastatur des Mikroprozessors.

Das elektronische Gerät 1 weist als Herzstück einen in einem Gehäuse angeordneten Mikroprozessor auf. Die verschiedenen Eichwerte und Funktionen werden in den Mikroprozessor über die auf der Vorderseite des Gerätes 1 angeordnete Eingabetastatur 2 eingegeben. Weiterhin weist das Gerät 1 zwei mit dem Mikroprozessor verbundene Eingangskabel 3 und 4 mit den jeweiligen Steckern 5 und 6 auf. Das Gerät 1 wird während des Einsatzes auf einem Ackerschlepper 7 oder 8 im Blickfeld des Schlepperfahrers angeordnet.

An den Vorderrädern 9 der Ackerschlepper 7 und 8 ist jeweils ein Sensor angeordnet, der die Umdrehung des Vorderrades erfasst. An diesen Sensor ist das Gerät 1 jeweils über den Stecker 5 anzuschliessen.

Weiterhin ist das Gerät 1 über den Stecker 6 mit den an den jeweiligen Dosierorganen verschiedener Verteilmaschinen als Zentrifugaldüngerstreuer 10, Pneumatikdüngerstreuer 11, Feldspritze 12, Sämaschine 13 oder Einzelkorndrillmaschine 14 ausgebildet ist.

Bei dem Zentrifugaldüngerstreuer 10 übermittelt der an dem Einstellschieber 15 angeordnete Sensor 16 über den Schaltkasten 17, an dem der Stecker 6 angeschlossen ist, entsprechend der Einstellung des Schiebers 15 Impulse an den in dem Gerät 1 angeordneten Mikroprozessor.

Der Sensor beim Pneumatikdüngerstreuer 11 ist in dem Bereich der Dosierorgane angeordnet und erfasst die jeweils momentane Drehzahl der Dosierorgane. Die Drehzahl der Dosierorgane repräsentierenden Impulse werden über den Schaltkasten 18, wenn der Stecker 6 an dem Schaltkasten 18 angeschlossen ist, an den in dem Gerät 1 angeordneten Mikroprozessor übermittelt.

Bei der Feldspritze 12 ist in der Zentralleitung zu den einzelnen Düsen ein Durchflussmesser angeordnet, der über den Schaltkasten 19, der über den Stecker 6 mit dem Gerät 1 verbunden ist, Impulse an den in dem Gerät 1 befindlichen Mikroprozessor übermittelt.

Die Sämaschine 13 weist einen Sensor auf, der entweder die Drehzahl der Säwelle erfasst oder die tatsächlich ausgebrachten Saatkörner zählt. Der Sensor übermittelt über den an der Sämaschine 13 angeordneten Schaltkasten 20, an dem der Stecker 6 angeschlossen ist, entsprechende Impulse an den im Gerät 1 angeordneten Mikroprozessor.

Bei der Einzelkorndrillmaschine 14 ist in dem Bereich der Vereinzelungsscheibe ein Sensor entweder zur Erfassung der Drehzahl der Säwelle oder der Anzahl der tatsächlich ausgebrachten Saatkörner, angeordnet. Dieser Sensor übermittelt ebenfalls über den an dem Tragrahmen der Maschine zugeordneten Schaltkasten 21, an dem der Strecker 6 angeschlossen ist, entsprechende Impulse an den in dem Gerät 1 angeordneten Mikroprozessor.

Die Eingabetastatur 2 des Gerätes 1 für den in dem Gerät 1 angeordneten Mikroprozessor weist zusätzlich zu der Zahlentastatur 22 und weiteren Eingabetastaturen 23 noch eine Speichertastatur auf, die hier aus acht Speichertasten 24, 25, 26, 27, 28, 29, 30 und 31 besteht, über die verschiedene Speicherplätze des Mikroprozessors mit verschiedenen schlepper- und verteilmaschinenspezifischen Eichwerten zu belegen sind.

Die Speichertaste 24 ist für einen Sensor vorgesehen, der Impulse pro Ausbringmenge an den Mikroprozessor übermittelt. In diesem Fall ist die Speichertaste 24 für den an dem Zentrifugalstreuer 10 angeordneten Sensor 16 vorgesehen. Vor Beginn der Streuarbeit muss der Landwirt eine Eichung der Ausbringmenge vornehmen. Werksseitig hat bereits eine Grundeichung der Schieberstellung des Schiebers 15 des Zentrifugaldüngerstreuers 10 stattgefunden, bei der der Öffnungsquerschnitt in Abhängigkeit von der Schieberstellung des Schiebers 15 berücksichtigt wird. Der Landwirt wählt eine Schieberstellung nach der Streutabelle oder nach eigener Wahl und nimmt eine Überprüfung der Ausbringmenge anhand einer Abdrehprobe vor. Bestätigt diese Abdrehprobe die gewünschte Ausbringmenge, werden das Gewicht der im Auffangbehälter aufgefangenen Düngermenge und die über den Sensor 16 ermittelten, vom Schieber 15 erzeugten Impulse über die Speichertaste 24 in den Mikroprozessor eingegeben. Dieser erstellt automatisch die Zuordnung zwischen Impulsen und Ausbringmenge und speichert diesen Wert unter der Speichertaste 24 ab. Dieser, für eine Düngersorte spezifische Mengenwert (Eichwert) bleibt solange im Mikroprozessor gespeichert, bis er durch Eingabe eines neuen Wertes wieder gelöscht wird. Bei der Abkopplung des Schaltkastens 17 vom Gerät 1 bleibt der Wert ebenfalls gespeichert, und der Landwirt kann das Gerät mit einer anderen Maschine koppeln.

Diese Maschine kann beispielsweise der Pneumatikstreuer 11 sein, bei dem der Sensor im Bereich der Dosierorgane angeordnet ist und die jeweils momentane Drehzahl der Dosierorgane erfasst, wobei der Sensor die Impulse pro Umdrehung der Dosierorgane aufnimmt. Diese aufgenommenen Impulse sind proportional der Ausbringmenge und werden über den Schaltkasten 18 an den in dem Gerät 1 angeordneten Mikroprozessor übermittelt. Für den Pneumatikstreuer 11 ist die Speichertaste 25 vorgesehen.

Vor Beginn der Streuarbeit muss der Landwirt auch hier eine Eichung in bezug auf die Ausbringmenge vornehmen. So drückt er beispielsweise die Taste «Eichung» der Eingabetasten 23 des Schaltkastens 1 und schaltet so über den Mikroprozessor die Dosierorgane ein. Diese Dosierorgane fördern den Dünger in einen Auffangbehälter. Der Sensor nimmt die von den Dosierorganen erzeugten Impulse auf, die an den Mikroprozessor des Gerätes 1 übermittelt werden. Nach beispielsweise 10 000 Impulsen schaltet der Mikroprozessor den Antrieb der Dosierorgane ab. Jetzt wiegt der Landwirt die von dem Auffangbehälter aufgenommene Düngermenge. Das Gewicht der Düngermenge wird über die Speichertaste 25 in den Mikroprozessor eingegeben. Der Mikroprozessor erstellt selbsttätig die Zuordnung zwischen Impulsen und Ausbringmenge und speichert diesen mengenspezifischen Eichwert unter der Speichertaste 25 ab. Somit kann die Ausbringarbeit erfolgen. Der abgespeicherte Wert bleibt ebenfalls bis zur Eingabe des neuen Wertes über dieselbe Speichertaste gespeichert und ist jederzeit abrufbereit, so dass das Gerät 1 vom Schaltkasten 18 abgekoppelt und an eine weitere Maschine angekoppelt werden kann.

Bei dieser Maschine kann es sich beispielsweise um die Feldspritze 12 handeln. Bei dieser Feldspritze 12 ist in der Zentralleitung, die zu den einzelnen Düsen führt, ein Durchflussmesser angeordnet und über den Schaltkasten 19 mit dem Schaltkasten 1 verbunden, wobei die von dem Durchflussmesser erzeugten Impulse an den in dem Gerät 1 befindlichen Mikroprosessor übermittelt werden. Ist der Durchflussmesser werksseitig geeicht, so kann der bekannte Eichwert über die Speichertaste 26 direkt in den Mikroprozessor eingegeben werden. Dieser Eichwert wird unter der Speichertaste 26 gespeichert und bleibt bis zur Eingabe eines neuen Wertes auf dem Speicherplatz im Mikroprozessor gespeichert. Liegt keine werksseitige Eichung des Durchflussmessers vor, muss der Landwirt eine entsprechende Eichung vornehmen. Zur Durchführung der Eichung drückt der Landwirt beispielsweise die Taste «Eichung» der Eingabetasten 23 und setzt so die Förderpumpe der Feldspritze 12 in Betrieb. Die von der Förderpumpe geförderte Spritzbrühe wird im Auffangbehälter aufgefangen. Die vom Durchflussmesser erzeugten Impulse werden an den Mikroprozessor übermittelt. Dieser schaltet die Förderpumpe beispielsweise nach 10 000 Impulsen ab. Der Landwirt litert die aufgefangene Spritzbrühe aus und gibt diesen Wert über die Speichertaste 26 in den Mikroprozessor ein. Der Mikroprozessor erstellt selbsttätig die Zuordnung zwischen Impulsen und Ausbringmenge und speichert diesen mengenspezifischen Wert unter der Speichertaste 26 ab. Dieser Eichwert bleibt bis zur Eingabe eines neuen Eichwertes auf diesem Speicherplatz gespeichert und ist jederzeit abrufbereit.

Des weiteren ist das Gerät 1 koppelbar mit dem Schaltkasten 20 der Sämaschine 13, wobei die Speichertaste 27 und 28 des Gerätes 1 für den Sensor vorgesehen sind, der Impulse pro Ausbringmenge an den Mikroprozessor übermittelt. Hierbei ist die Speichertaste 27 für den Fall vorgesehen, in dem der Sensor die Ausbringmenge proportionale Drehzahl der Säwelle erfasst und die von der Säwelle erzeugten Impulse an den Mikroprozessor übermittelt. Liefert der Sensor pro Korn einen Impuls, entfällt eine Eichung. Entspricht hingegen die Drehzahl der Säwelle einer proportionalen Ausbringmenge, ist eine Eichung vom Landwirt vorzunehmen. Hierzu wird die Säwelle durch betätigen der Taste «Eichung» der Eingabetasten 23 eingeschaltet. Jetzt wird das Saatgut von den Dosierorganen in eine Auffangmulde gefördert. Der an der Säwelle angeordnete Sensor liefert die von dieser Welle erzeugten Impulse an den Mikroprozessor, wobei der Mikroprozessor den Antrieb der Säwelle beispielsweise nach 2000 Impulsen abschaltet. Der Landwirt wiegt die in der Auffangmulde aufgefangene Saatgutmenge und gibt diesen Wert über die Speichertaste 27 in den Mikroprozessor ein. Dieser erstellt selbsttätig die Zuordnung zwischen Impulsen und Ausbringmenge und speichert diesen mengenspezifischen Eichwert unter der Speichertaste 27 ab. Dieser Eichwert bleibt bis zur Eingabe eines neuen Eichwertes im Mikroprozessor auf diesem Platz gespeichert, ist jederzeit abrufbereit und ermöglicht den Einsatz des Schaltkastens 1 für mehrere Arbeitsgeräte.

So ist das Gerät 1 beispielsweise auch mit dem am Tragrahmen der Einzelkornsämaschine 14 angeordneten Schaltkasten 21 koppelbar. In diesem Fall sind die Speichertasten 28 und 29 für den an der Einzelkornsämaschine 14 angeordneten Sensor vorgesehen. Bei der Erfassung der einzelnen Saatkörner beispielsweise durch eine Lichtschranke entfällt eine Eichung, da die vom Sensor erfassten und an den Mikroprozessor des Schaltkastens 1 gelieferten Impulse gleich der Anzahl der tatsächlich ausgebrachten Saatkörner entspricht. Bei der Betätigung der Speichertaste 28 wird das Zählen der Impulse eingeleitet. Ebenfalls entfällt eine Eichung, wenn bedingt durch die Konstruktion der Vereinzelungsscheibe eine genau definierte Saatkörnermenge pro Umdrehung der Vereinzelungsscheibe ausgebracht wird. Über die Speichertaste 29 wird die Anzahl der von der Vereinzelungsscheibe pro Umdrehung erzeugten Impulse und die pro Umdrehung der Vereinzelungsscheibe ausgebrachten Saatkörner in den Mikroprozessor eingegeben. Diese Zuordnung zwischen Impulsen und Ausbringmenge wird unter der Speichertaste 29 gespeichert und ist jederzeit abrufbar.

Weiterhin sind zwei Speichertasten 30 und 31 auf der Eingabetastatur 2 des Gerätes 1 vorgesehen. Bei der jeweiligen Betätigung der Speichertasten 30 und 31 werden zwei unterschiedliche Raddurchmesser des Rades im Mikroprozessor gespeichert, an dem Sensoren zur Ermittlung der Fahrgeschwindigkeit angeordnet sind. Infolge dieser Abspeicherung von zwei unterschiedlichen Raddurchmessern wird es ermöglicht, die Arbeitsmaschinen sowohl an einen grösseren als auch an einen kleineren Schlepper anzukoppeln, ohne weitere Einstellungen bzw. Eichvorgänge vornehmen zu müssen.

Dieses Abspeichern der verschiedenen Verteilmaschinen oder Schleppern zugeordneten spezifischen Eichwerte in den Mikroprozessor des Gerätes 1 ermöglichen dem Landwirt den Einsatz des Gerätes an verschiedenartigen Verteilmaschinen. Der Landwirt erhält ein mobiles Gerät. Hierdurch kann er seine Maschinen in unregelmässiger Folge und verschiedenen Zeitabständen einsetzen, ohne vor jedem Einsatz der jeweiligen Maschine lästige, zeitaufwendige Neueinstellung vornehmen zu müssen, nur beim ersten Einsatz ist eine Eichung und Eingabe erforderlich. Er koppelt einfach das Gerät 1 mit dem jeweiligen Schaltkasten an der von ihm eingesetzten Maschine, ruft den entsprechenden, gespeicherten Eichwert der am Schlepper angehängten Maschine über die jeweilige Speichertaste ab und kann mit den Verteilarbeiten beginnen. Die von den jeweiligen Sensoren der verschiedenen Verteilmaschinen aufgenommenen und an den Mikroprozessor weitergeleiteten Impulse werden unter Berücksichtigung der jeweiligen gespeicherten spezifischen Eichwerte umgerechnet und ergeben so den für die momentane Ausbringmenge repräsentativen Wert. Dem Landwirt wird der Einsatz seiner Verteilmaschine auf diese Weise wesentlich erleichtert und der Einsatz des elektronischen Dosierelementes sehr preiswert.

Es ist durchaus denkbar, dass die Eingabetastatur 2 des Gerätes 1 durch weitere Speichertasten mit verschiedenen zu besetzenden Speicherplätzen erweitert wird, wodurch sich weitere für den Landwirt nützliche Funktionen und Informationen speichern lassen.

Falls es für den Landwirt sinnvoller erscheint, Eichwerte von verschiedenen Düngersorten abzuspeichern, ist dies bereits jetzt möglich. Über die Speichertasten 24, 25 und 27 kann er die für verschiene Düngersorten spezifischen Eichwerte speichern und muss die Verteilmaschine bei Düngersortenwechsel nicht mit der neuen Düngersorte eichen, wenn bereits zu früherer Zeit eine Eichung mit dieser Düngersorte stattgefunden hat. Hat bereits eine Eichung stattgefunden, braucht er nur die entsprechende Speichertaste zu drükken und der Mikroprozessor nimmt die richtige Auswertung der von den Sensoren aufgenommenen Impulse vor und liefert einen der momentanen Ausbringmenge repräsentiven Wert.

## Patentansprüche

1. Elektronisches Gerät (1) für landwirtschaftliche Verteilmaschinen (10, 11, 12, 13, 14), das ein Dosierelement der Verteilmaschine steuert, mit einem Eingang für dem Gut- oder Materialausfluss korrelierte Sensorsignale, mit einem Mikroprozessor, mit einer Eingabetastatur (2), die eine Speichertastatur (24–31) aufweist, durch die verschiedene Speicherplätze des Mikroprozessors mit zur Umrechnung des Gut- oder Materialflusses bei verschiedenen Verteilmaschinen (10, 11, 12, 13, 14) und/oder von verschiedenen Gut- und Materialsorten dienenden Eichwerten direkt belegbar sind, wobei die Eichwerte bei Bedarf jeweils abrufbar sind, und wobei der Mikroprozessor die Sensorsignale mit den Eichwerten korrigiert, so dass ein den tatsächlichen Gut- oder Materialfluss repräsentierender Wert erhalten wird, der zur Steuerung des Dosierelements verwendet wird.

2. Verteilmaschine nach Anspruch 1, dadurch gekennzeichnet, dass der Mikroprozessor verschiedene Rechnerprogramme besitzt, die jeweils auf die entsprechenden Besonderheiten der Verteilmaschinen (10, 11, 12, 13, 14) abgestimmt sind.

3. Verteilmaschine nach Anspruch 2, dadurch gekennzeichnet, dass bei Betätigung der Speichertastatur (24–31) zur Eingabe eines maschinenspezifischen Eichwertes automatisch ein der Betätigung entsprechendes Rechnerprogramm abgerufen wird.

4. Verteilmaschine nach Anspruch 1, dadurch gekennzeichnet, dass weiterhin Speicherplätze (30, 31) für den Raddurchmesser des Rades (9) vorgesehen sind, an dem Sensoren zur Ermittlung der Fahrgeschwindigkeit angeordnet sind.

## Revendications

1. Appareil électronique (1) pour des distributeurs agricoles (10, 11, 12, 13, 14), appareil commandant un élément de dosage du distributeur, ayant une entrée pour des signaux de capteur liés à la sortie de produit ou de matière, un microprocesseur, un clavier d'entrée (2) qui comporte un clavier de mise en mémoire (24–31), permettant d'inscrire dans les différents emplacements de mémoire du microprocesseur directement avec les grandeurs de tarage s'employant pour transformation par calcul du débit de matière ou de produit pour les différents distributeurs (10, 11, 12, 13, 14) et/ou les différents types de produit ou de matière, les grandeurs de tarage pouvant être appelées en cas de besoin et le microprocesseur corrigeant les signaux de capteur par les grandeurs de tarage pour obtenir une grandeur qui représente effectivement le débit de matière ou de produit et qui sert à commander l'élément de dosage.

2. Appareil selon la revendication 1, caractérisé en ce que le microprocesseur contient différents programmes de calcul définis chaque fois en fonction des caractéristiques particulières des distributeurs (10, 11, 12, 13, 14).

3. Appareil selon la revendication 2, caractérisée en ce qu'en actionnant le clavier des touches de mémoire (24–31) pour introduire une grandeur de tarage caractéristique de la machine, on appelle automatiquement un programme de calcul correspondant à cet actionnement.

4. Appareil selon la revendication 1, caractérisé en ce qu'il comporte en outre des emplacements de mémoire (30, 31) pour le diamètre de la roue (9), roue munie de capteurs fournissant la vitesse de déplacement.

## Claims

1. Electronic device (1) for agricultural spreading machines (10, 11, 12, 13, 14) which controls an apportioning element of the spreading machine, comprising an input for sensor signals correlated with the goods or material output; a microprocessor with an input keyboard (2) incorporating a storage keyboard (24–31) which allow direct access to various storage locations of the microprocessor for storing calibration values used for converting goods or material flow of different spreading machines (10, 11, 12, 13, 14) and/or of different types of goods or materials; whereby said calibration values can be recalled as required; whereby the microprocessor will correct the sensor signals through the calibration values so that a value representing the actual goods or material flow is obtained, which value will be used to control the apportioning elements.

2. Spreading machine as per claim 1, characterised in that, the microprocessor includes different computer programs to suit the specific characteristics of the spreading machines (10, 11, 12, 13, 14).

3. Spreading machine as per claim 2, characterised in that, feeding a machine-specific calibration value into the computer via storage keyboard (24, 31) automatically recalls a corresponding computer program.

4. Spreading machine as per claim 1, characterised in that, in addition, storage locations (30, 31) for the diameter of the wheel (9) which has sensors for verification of the driving speed attached, are provided.

FIG. 1

km/h   l/ha  kg/ha

Kontrolle

○  ○          ○
+  —
Korrektur      Antrieb

FIG. 2

↓ Information ↓

↓ Eingabe ↓

| 7 | 8 | 9 | : |
| 4 | 5 | 6 | × |
| 1 | 2 | 3 | — |
| 0 | , | = Eingabe | + |

● ├ km ┤

● ha

● Total ha

C

● t kg / min min

● t / kg

● Total t : kg

● ⏱

● 1 Imp/kg 24

● 2 Imp/kg 25

● 28 Körner

● 30 Rad 1 ø

● Imp/l 26

● 3 Imp/kg 27

● 29 Imp./ Körner

● 31 Rad 2 ø

Speicher

● Arbeits-breite m

● Eichung Imp 100 m

● Eichung

● Soll kg ha : ha

● + 10%

● — 10%

22   23   2   3   4   1

2/2